# DEMANDE DE BREVET EUROPEEN

(11) **EP 0 693 340 A1**
(43) Date de publication de la demande: **24.01.1996**
(21) Numéro de dépôt: 95420198.4
(22) Date de dépôt: 17.07.1995
(51) Int. Cl.: B23D 45/00, B23D 45/10, B23D 47/04

(54) **Procédé d'obtention de bagues par tronçonnage d'un tube métallique et dispositif pour sa mise en oeuvre**

(30) Priorité: 19.07.1994 FR 9408924
(71) Demandeur: EUROPE MECANIQUE, F-58400 La Charité-Sur-Loire (FR)
(72) Inventeur: Peytavin, Pierre, F-92200 Neuilly-sur-Seine (FR)
(74) Mandataire: Desolneux, Jean-Paul Charles

(57) **Abrégé**

L'invention concerne un procédé et un dispositif pour réaliser en série des bagues métalliques par tronçonnage d'un tube sans soudure.

Le procédé consiste à monter sur un arbre entrainé par un moteur (3) une pluralité de fraises-scies circulaires (6) dont l'écartement est égal à la largeur de la bague à réaliser, puis à rapprocher transversalement cet arbre de la paroi du tube (2) immobilisée dans un étau (4), les axes du tube (X1 - X1) et de l'arbre étant parallèles et à effectuer une première coupe partielle de la paroi du tube sur un intervalle angulaire choisi. On répète l'opération après rotation du tube (2) le nombre de fois nécessaire pour séparer les bagues.

Le dispositif comporte un ensemble de moyens permettant une mise en oeuvre du procédé.

## Description

Le procédé et le dispositif suivant l'invention concernent la réalisation en série de bagues métalliques à partir de tubes.

De telles bagues métalliques sont en particulier utilisées pour la réalisation de cages de roulements à billes et aussi pour différents autres types d'applications. Les tubes mis en oeuvre peuvent être en acier à roulement tel que l'acier suivant la norme AFNOR 100 C6 ou en d'autres nuances d'aciers non alliés, alliés, inoxydables ou réfractaires. On peut aussi réaliser des bagues à partir de tubes en métaux ou alliages autres que des aciers. Les tubes dans lesquels sont réalisées les bagues peuvent être fabriqués par toute méthode de fabrication jugée adaptée aux produits que l'on veut faire.

On utilise couramment pour le tronçonnage de telles bagues des outils de saignée munis en général d'une pièce de coupe en carbure. On atteint avec de tels outils des profondeurs de coupe importantes avec des vitesses de coupe atteignant environ 120 m/min. Ces outils ont l'inconvénient d'une largeur de coupe relativement importante, de l'ordre de 4 à 5 mm et d'une durée de vie relativement courte. De plus, il ne peuvent pratiquement pas être réaffutés. Les copeaux larges et continus ainsi réalisés font obstacle au refroidissement et à la lubrification ; il en résulte une température élevée de l'arête de coupe qui contribue à réduire la durée de vie de l'outil.

Pour accélérer la production des bagues on a proposé de monter dans le même plan plusieurs outils de saignée attaquant simultanément un même tronçon de tube.

On accélère ainsi la réalisation des bagues mais on constate toujours une perte importante de métal sous forme de copeaux due à la largeur des copeaux obtenus au moyen de ce type d'outil.

On peut utiliser aussi pour le tronçonnage de bagues métalliques des fraises scies circulaires, entraînées en rotation, dont l'axe est parallèle à l'axe du tube dans lequel sont découpées les bagues, tube lui-même animé d'un mouvement de rotation. Plusieurs fraises scies décalées axialement l'une par rapport à l'autre de la largeur des bagues à découper et réparties autour du tube à tronçonner peuvent être mises en oeuvre sur la même machine de tronçonnage.

L'utilisation de disques de fraises-scies en acier à coupe rapide, permet d'effectuer des coupes de largeur inférieure à 3 mm et permet aussi d'atteindre des vitesses de coupe élevées.

Un tel procédé permet un accroissement important de rendement matière par rapport à l'utilisation d'outils de saignée pourvus de pièces de coupe rapportées en carbure ayant au moins 4 mm de largeur.

Il est possible aussi d'accroître la vitesse de coupe grâce à une efficacité accrue du refroidissement et de la lubrification d'un disque comportant un grand nombre de dents par rapport à un outil à pièce de coupe unique.

Cependant, on constate qu'il est difficile de réaliser une machine de tronçonnage, du type qui vient d'être décrit, comportant plus de quatre fraises-scies circulaires travaillant simultanément.

Ces limitations ont pour résultat que le coût d'exécution du tronçonnage des bagues demeure élevé car, si le rendement matière a été amélioré la productivité, mesurée en nombre de bagues tronçonnées par unité de temps, reste limitée.

On a donc cherché à réduire de façon importante le coût de l'opération de tronçonnage en accroissant la productivité tout en conservant un rendement matière élevé.

Le procédé et le dispositif qui font l'objet de l'invention permettent d'atteindre les résultats cherchés. Ils permettent en particulier, sans que cette indication soit limitative, d'effectuer de façon simultanée le tronçonnage d'environ six à douze bagues métalliques, ou davantage, par exemple vingt bagues, à partir d'un tube, chaque coupe étant effectuée au moyen d'une fraise-scie circulaire d'épaisseur la plus faible possible, cette épaisseur étant avantageusement inférieure à environ trois millimètres et limitée couramment à une épaisseur d'environ deux millimètres seulement.

Le présent procédé consiste à mettre en oeuvre de façon simultanée une pluralité de fraises-scies circulaires, de mêmes dimensions en particulier de même diamètre, montées sur un seul arbre entraîné en rotation par un moyen moteur. On peut faire varier le nombre de ces fraises-scies dans de très larges limites et on a avantage à mettre en oeuvre un grand nombre relativement élevé de telles fraises-scies, par exemple sans que ces chiffres n'aient de caractère limitatif de six à douze fraises-scies ou peut-être même davantage, par exemple vingt fraises-scies.

L'axe de l'arbre portant les fraises-scies est disposé parallèlement à l'axe du tube à tronçonner et l'écartement ménagé entre chaque fraise-scie et la suivante est égal à la largeur des bagues à réaliser.

Cet arbre et son moyen moteur sont montés de façon telle que l'arbre puisse avancer transversalement en direction du tube à tronçonner. Cette avance transversale est effectuée de façon que les disques des fraises-scies se déplacent dans leur plan, leurs dentures venant simultanément en contact avec la paroi du tube puis pénétrant jusqu'à une profondeur déterminée.

Pendant la phase de pénétration des disques des fraises-scies dans la paroi du tube, celui-ci est immobilisé par un moyen d'immobilisation tel qu'un étau agissant longitudinalement sur le tube sur une longueur correspondant à la zone dans laquelle sont tronçonnées les bagues. La vitesse de pénétration des fraises-scies dans le tube est ajustée en fonction de la vitesse de rotation des fraises-scies et des caractéristiques de leurs dentures, afin d'obtenir pour un matériau de tube donné le meilleur rendement. La profondeur de pénétration est généralement limitée par la hauteur des bords du moyen d'immobilisation et le rayon utile des disques de fraises-scies, compte tenu du diamètre extérieur des moyens d'espacement et de blocage en rotation de chacun de ces disques sur l'arbre d'entraînement. Il est théoriquement possible, en utilisant des disques de grand diamètre et en munissant le moyen d'immobilisation de passages pour les disques des fraises-scies de largeur et profondeur suffisantes, de tronçonner les bagues en une seule coupe. Ceci conduit cependant à des moyens d'immobilisation complexes et coûteux. Selon le procédé de l'invention on limite la profondeur de coupe à la réalisation d'une entaille traversant la paroi du tube sur une fraction de la périphérie du tube telle que par exemple un peu plus que 1/3 ou 1/4 de la périphérie ceci correspondant à l'engagement des fraises-scies dans le tube sur une profondeur déterminée puis on effectue à nouveau, autant de fois que nécessaire, la même coupe après avoir fait, à chaque fois, tourner le tube autour de son axe, mais sans déplacement axial d'un angle déterminé correspondant de préférence à la fraction de périphérie coupée sur le tube.

Dans le cas où la profondeur de coupe correspond à 1/3 ou 1/4 de la périphérie du tube on fait ainsi tourner le tube respectivement 2 ou 3 fois pour en respectivement 3 ou 4 coupes obtenir le tronçonnage des bagues. L'immobilisation du tube étant effectuée par exemple au moyen d'un étau on desserre celui-ci rapidement après chaque coupe partielle puis, après avoir fait tourner le tube sur lui-même d'un angle déterminé sans déplacement axial on serre à nouveau le tube dans l'étau pour effectuer la coupe suivante. De la sorte tant les bagues prises individuellement que la série de bagues coupées par l'ensemble des fraises-scies sont maintenues au moment où intervient le dernier trait de fraises-scies conduisant à leur séparation les unes des autres.

Après la dernière coupe, le desserrage du moyen d'immobilisation tel qu'un étau permet de libérer les bagues qui ont été ainsi coupées, puis un moyen de déplacement axial permet de faire avancer le tube le long de son axe de la quantité nécessaire pour qu'une nouvelle zone de coupe vienne à son tour s'engager dans le moyen d'immobilisation. Un moyen de butée permet de façon avantageuse de stopper l'avance du tube, de façon précise, pour que celui-ci dépasse exactement d'une largeur de bague l'intersection du tube avec le plan de coupe du disque de fraise-scie le plus en aval par rapport au sens de déplacement du tube.

On donne au moyen d'immobilisation tel qu'un étau la longueur nécessaire pour maintenir l'ensemble des bagues jusqu'à la fin de la dernière coupe.

On munit avantageusement les bords du moyen d'immobilisation axial tel qu'un étau au niveau de la zone d'appui contre la paroi du tube d'une ou plusieurs bandes en matière plastique ou en élastomère ayant une adhérence suffisante pour éviter tout déplacement longitudinal ou angulaire du tube pendant la coupe. Pour limiter le plus possible les temps morts, la vitesse de retour après coupe de l'arbre porteur des fraises-scies doit être la plus rapide possible. Il en est de même pour les actions de desserrage et resserrage du moyen d'immobilisation tel qu'un étau ainsi que pour les rotations du tube à tronçonner. Ces rotations sont effectuées, avantageusement, de façon automatique par des moyens permettant un déplacement angulaire d'un angle déterminé. D'autres moyens, automatiques de préférence, permettent, après l'exécution de la dernière coupe d'une série de bagues, d'effectuer le desserrage de l'étau, l'éjection des bagues tronçonnées, l'avance du tube vers l'aval jusqu'au point d'arrêt fixé, le resserrage de l'étau et la mise en route d'un nouveau cycle opératoire.

L'invention concerne aussi un dispositif permettant la mise en oeuvre du procédé suivant l'invention.

Ce dispositif comporte un arbre, entraîné en rotation par un moyen moteur, sur lequel est monté une série de fraises-scies circulaires avantageusement réalisées en acier rapide. Les dimensions de ces fraises-scies sont fonction de celles des bagues à réaliser. A titre d'exemple non limitatif, le diamètre extérieur de ces bagues est compris entre 100 et 200 mm, voire 60 à 200 mm, avec une épaisseur de parois d'environ 15 à 30 mm, voire 10 à 30 mm. On utilise, alors de préférence, des fraises-scies dont le diamètre du disque est compris entre 150 et 350 mm, voire 250 à 400 mm, l'épaisseur étant, de préférence, comprise entre 2 et 2,5 mm. L'écartement entre les disques est ajusté pour correspondre à la largeur des bagues et des moyens connus permettent de les bloquer en rotation.

Comme indiqué plus haut, l'arbre sur lequel sont montées les fraises-scies ainsi que son moyen moteur sont montés de façon telle que l'arbre soit apte à se déplacer transversalement dans un sens ou dans l'autre, les disques des fraises-scies se déplaçant dans leurs plans respectifs d'origine afin de se rapprocher ou s'éloigner du tube à tronçonner. Un deuxième moyen moteur à vitesse règlable permet de réaliser ces déplacements. La vitesse d'avance est choisie en fonction du diamètre du tube et de son épaisseur de paroi ainsi qu'en fonction des caractéristiques de l'acier ou autre métal ou alliage dont est constitué le tube. La profondeur de pénétration est ajustée avec précision afin d'atteindre l'ouverture angulaire ou fraction de périphérie du tube visée pour la coupe de la paroi du tube. Pour le retour à la position de départ on utilise de préférence une vitesse aussi grande que possible afin de réduire au minimum les temps morts.

Le dispositif comporte aussi un étau qui permet de saisir le tube et de l'immobiliser sur toute la longueur de la zone de découpe des bagues. Comme précisé plus haut, cet étau comporte de préférence au moins une bande longitudinale en matière plastique ou élastomère qui améliore l'adhérence et évite le marquage des parois. De préférence, cette ou ces bandes est (sont) logée(s) dans au moins une nervure longitudinale formée dans la zone de contact entre au moins une paroi latérale de l'étau et le tube. Des moyens automatisés assurent le desserrage puis le resserrage de l'étau chaque fois qu'une rotation du tube d'un angle déterminé doit être effectuée entre deux coupes partielles successives. La rotation du tube autour de son axe est assurée, de préférence de façon automatique, par tout moyen adapté qui permet non seulement une telle rotation d'un angle déterminé mais qui assure aussi le maintien du tube dans le sens longitudinal sans déplacement appréciable le long de son axe pendant tout le temps où l'étau est en position d'ouverture entre deux coupes successives partielles de la paroi du tube. Après la dernière coupe un moyen de préférence automatisé permet, après évacuation des bagues qui viennent d'être tronçonnées, d'avancer à nouveau le tube sur une longueur égale à la précédente avec arrêt contre une butée. Le dispositif comporte aussi avantageusement un ensemble de moyens de commande et de contrôle qui permettent de réaliser le procédé suivant l'invention de façon automatisée en actionnant successivement les mécanismes permettant d'exécuter les étapes successives du processus opératoire.

L'exemple et les figures ci-après décrivent de façon non limitative un mode particulier de réalisation du dispositif et de mise en oeuvre du procédé qui fait l'objet de l'invention.

La figure 1 est une vue schématique en perspective d'un arbre sur lequel sont montées suivant l'invention en série des fraises-scies circulaires.

La figure 2 est une vue schématique d'ensemble montrant selon l'invention un tube à tronçonner, engagé dans un étau permettant de le bloquer en rotation pendant une coupe partielle au moyen d'une série de fraises-scies circulaires.

La figure 3 est la vue schématique à partir du plan de coupe A-A de la figure 2 d'une coupe suivant l'invention effectuée sur un tube bloqué dans un étau au niveau d'une des fraises-scies avec une profondeur de pénétration correspondant à une coupe partielle de la paroi du tube.

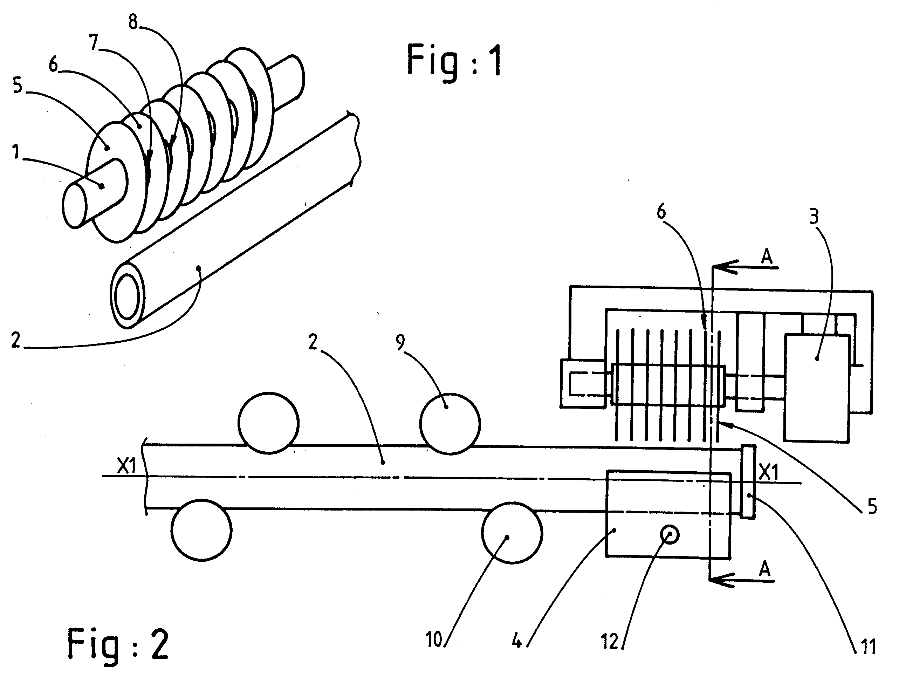

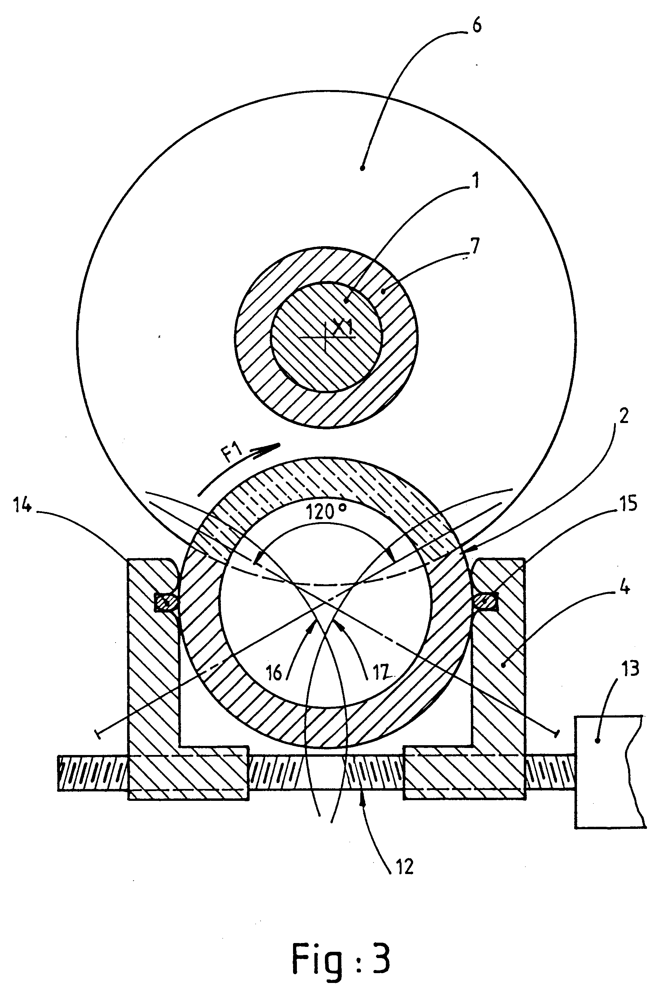

La figure 1 est une vue en perspective, schématique, d'un arbre 1 sur lequel sont montées sept fraises-scies circulaires telles que 5, 6 qui sont maintenues à des écartements déterminés tels que 7, 8, les unes, des autres pour permettre de découper simultanément sept bagues - y compris la bague correspondant à l'extrémité du tube - dans un tube à tronçonner 2 en approchant transversalement l'arbre 1 entraîné en rotation par un moteur 3, représenté à la figure 2, d'un tube 2 qui est immobilisé par un étau 4 comme on le voit aux figures 2 et 3.

Dans le cas de cet exemple, on met en oeuvre sept fraises-scies circulaires telles que 5, 6 en acier à coupe rapide de 275 mm de diamètre, 2 mm d'épaisseur et ayant un pas de denture de 7 mm.

Les fraises-scies sont montées sur un arbre 1 de 60 mm de diamètre et séparées les unes des autres par des pièces d'écartement annulaires 7, 8, de 100 mm de diamètre extérieur, le rayon utile de ces fraises-scies étant donc de 87,5 mm. On entraine l'arbre 1 à une vitesse de rotation maximale d'environ 4 tours par seconde, ce qui correspond à une vitesse périphérique d'environ 207 m/min.

Le tube à tronçonner 2, mesure environ 160 mm de diamètre extérieur pour une épaisseur d'environ 25 mm. Il est en acier à roulement type AFNOR 100 C6. Il s'agit d'un tube sans soudure d'environ une dizaine de mètres de long. Comme le montre la figure 2 des galets tels que 9, 10 permettent d'introduire l'extrémité aval du tube dans l'étau 4 jusqu'à venue contre une butée 11 suivant l'axe X1 - X1 grâce à des moyens moteurs non représentés. L'étau 4, comme le montre la figure 3, comporte des moyens de serrage et desserrage tels que la vis 12 à filets orientés en sens contraire qui peut être actionnée dans un sens ou dans l'autre par le moteur 13.

L'axe de l'arbre 1 sur lequel sont montées les fraises-scies reste toujours parallèle à l'axe X1 - X1 du tube. Pour procéder, à la coupe, un moyen de déplacement non représenté permet d'approcher et d'éloigner l'arbre 1 du tube 2, les fraises-scies se déplaçant dans leurs plans respectifs d'origine.

On voit que l'étau comporte des handes en élastomère 14, 15 orientées parallèlement à l'axe du tube et situées au voisinage d'un diamètre qui assurent une bonne adhérence en position de blocage de l'étau tout en évitant de marquer les parois du tube. La figure 3 montre que la coupe des bagues dans le tube peut être effectuée en trois fois, chacune des coupes partielles permettant de sectionner la paroi du tube sur une zone angulaire un peu supérieure à 120°, soit sur un peu plus du tiers de la périphérie du tube.

Les arcs de cercle 16 et 17 obtenus après respectivement une première rotation du tube de 120°, puis une deuxième rotation de 120° suivant F1 montrent quelle sera la position angulaire de la 2ème puis de la 3ème coupe partielle cette dernière permettant de libérer les sept bagues. Ces rotations successives sont effectuées de préférence grâce à un moyen d'entraînement non représenté, disposé en amont de l'étau et axé sur l'axe X1 - X1 du tube. Ce moyen d'entraînement comporte par exemple un deuxième étau différent de l'étau 4 entourant le tube et apte à être solidarisé avec celui-ci ; un cadre fixe entoure cet étau qui est monté en rotation sur lui. Cet étau est solidaire du cadre dans le sens axial et peut être entraîné en rotation grâce à un moteur pas à pas qui engrène avec une denture périphérique.

Des moyens de programmation permettent, après exécution d'une coupe partielle de solidariser le tube et cet étau puis, après desserrage de l'étau 4, de faire tourner le tube d'un angle de par exemple 120°. Après resserrage de l'étau 4 on désolidarise l'entraînement en rotation du tube.

On remarque que la longueur de l'étau 4 doit s'étendre sur l'ensemble de la zone de tronçonnage des sept bagues, en tenant compte de la largeur totale des traits de coupe.

La durée d'exécution d'un cycle opératoire de tronçonnage complet dépend de nombreux facteurs. On admet cependant qu'une fraise-scie telle que celles décrites peut couper environ 1 à 1,5 cm2/seconde. La section totale du tube est de 106 cm2. Le temps de coupe total ne dépassera pas 100 s et si l'on prend 20 s pour effectuer les différentes manoeuvres nécessaires on obtient une série de 7 bagues en 2 min.

Cette production par unité de temps sera d'autant plus élevée que l'on mettra en oeuvre sur un même arbre 1 un nombre plus grand de fraises-scies telles que 5, 6. Le nombre de sept fraises-scies de l'exemple n'est nullement limitatif et a été pris pour faciliter la réalisation des figures.

De nombreuses modifications peuvent être apportées qui ne sortent pas du domaine de l'invention revendiquée.

## Revendications

**1/** Procédé d'obtention de bagues par tronçonnage d'un tube métallique (2) caractérisé en ce qu'on monte plusieurs fraises-scies circulaires (5, 6) de mêmes dimensions sur un arbre (1), à intervalles égaux à la largeur des bagues à réaliser, cet arbre étant entraîné en rotation par un moyen moteur (3) autour de son axe parallèle à celui (X1-X1), du tube (2) à tronçonner dont la zone de découpage des bagues est immobilisée sur sa longueur par un moyen d'immobilisation (4), puis en ce qu'on rapproche transversalement l'arbre (1) du tube (2) de façon à engager les fraises-scies dans la paroi du tube jusqu'à une profondeur déterminée, et faire une coupe partielle correspondant à la coupe d'une fraction de la périphérie du tube puis en ce qu'après dégagement des fraises-scies et dégagement du tube du moyen d'immobilisation on fait tourner le tube d'une fraction de tour, sans déplacement axial puis, après immobilisation du tube par le moyen d'immobilisation, on effectue une nouvelle coupe partielle dans le même plan de coupe que la coupe précédente en engageant les fraises-scies dans la paroi du tube jusqu'à la profondeur voulue pour faire la nouvelle coupe partielle, la séquence opératoire de dégagement des fraises-scies, dégagement du tube du moyen d'immobilisation, rotation du tube d'une fraction de tour, immobilisation du tube par le moyen d'immobilisation puis coupe partielle du tube dans le même plan de coupe que les coupes précédentes étant repétée le nombre de fois nécessaire pour assurer le découpage complet de la série de bagues.

**2/** Procédé suivant revendication 1 caractérisé en ce qu'après découpage complet de la série de bagues et enlèvement de celles-ci, on avance le tube (2) en engageant son extrémité dans le moyen d'immobilisation (4) sur une longueur suffisante pour réaliser une nouvelle série de bagues.

**3/** Procédé suivant revendication 1 ou 2 caractérisé en ce que le moyen d'immobilisation du tube est un étau qui maintient le tube sur toute la longueur où intervient la découpe des bagues, les machoires de cet étau permettant la réalisation de coupes partielles.

**4/** Procédé suivant revendications 1 à 3 caractérisé en ce qu'on monte un grand nombre de fraises-scies circulaires (5, 6) sur l'arbre qui assure leur entraînement.

**5/** Procédé suivant revendication 4 caractérisé en ce que l'on monte de 6 à 20 fraises-scies sur l'arbre qui assure leur entraînement.

**6/** Procédé suivant revendication 1 à 5 caractérisé en ce qu'on effectue le tronçonnage d'une série de bagues au moyen de coupes partielles successives coupant des fractions égales de la périphérie du tube.

**7/** Procédé suivant l'une des revendications 1 à 6 caractérisé en ce qu'on effectue le tronçonnage d'une série de bagues au moyen de 3 ou 4 coupes partielles.

**8/** Dispositif permettant l'obtention de bagues par tronçonnage d'un tube métallique caractérisé en ce qu'il comporte un moyen de déplacement longitudinal d'un tube (2) suivant son axe (X1 - X1) afin de permettre d'engager la zone de découpage des bagues à l'intérieur d'un étau (4) à serrage et desserrage commandés, étau destiné à immobiliser le tube sans empêcher les opérations de coupe, un arbre d'entraînement (1) d'axe parallèle à celui du tube et muni d'un moyen moteur (3) sur lequel sont réparties et montées à intervalles égaux plusieurs fraises-scies circulaires (5, 6) de mêmes dimensions, cet arbre (1) étant monté sur un support mobile apte à se déplacer transversalement en direction de l'axe (X1 - X1) du tube (2) pour effectuer sur le tube (2) une série de coupes partielles de profondeur ajustable, des moyens permettant après retour du support après coupe partielle et dégagement des fraises-scies du tube d'effectuer au moins un cycle comprenant un desserrage de l'étau, une rotation du tube autour de son axe d'un angle déterminé, et sans mouvement d'avance axiale, un resserrage de l'étau, une nouvelle coupe partielle du tube.

**9/** Dispositif suivant revendication 8 caractérisé en ce qu'un ensemble de moyens de commande et de contrôle permet de réaliser de façon entièrement automatisée le procédé suivant l'invention.
